# EUROPEAN PATENT SPECIFICATION

(11) **EP 0 794 369 B1**
(45) Date of publication and mention of the grant of the patent: **16.05.2001**
(21) Application number: 97102646.3
(22) Date of filing: 19.02.1997
(51) Int. Cl.: F16K 5/02, F16K 27/06

(54) **Cock with rotatable truncated coneshaped plug**
Hahn mit drehbarem Kegelküken
Robinet à tournant rotatif conique

(30) Priority: 08.03.1996 IT SV960010
(43) Date of publication of application: 10.09.1997
(73) Proprietor: TECNO PLASTIC S.p.A., 16012 Busalla (IT)
(72) Inventor: Tubaro, Bruno, I-16030 Sori (IT)
(74) Representative: Karaghiosoff, Giorgio Alessandro, Dott.

(56) References cited:
- DD-A- 45 650
- DE-C- 318 754
- DE-U- 1 948 578
- DE-U- 7 123 560
- FR-A- 1 152 441
- GB-A- 1 519 481
- US-A- 4 147 184
- US-A- 4 277 046

## Description

The invention relates to cocks provided with a truncated cone-shaped plug rotatable in a corresponding truncated cone-shaped housing hole inside the body of the cock, according to the preamble of claim 1.

Document DE-U-1.948 578 discloses a cock according the preamble of claim 1.

This cock, has the problem to bind the rotatable truncated cone-shaped plug in its operating position to the body of the cock ensuring a strong and long-lasting retainment of the rotatable plug in its predetermined axial operating position, wherein it ensures the best seal. The present invention is intended to solve this problem, with a simple and cheap construction by providing a cock which is easy to manufacture and equally easy and fast to assemble, and in which the bind between the plug and the body of the cock is strong and time-resistant, with no possible yielding due to damages by external agents or to relaxation of the elastic characteristics of plastic.

This problem is solved by the invention with a cock according to the preamble of claim 1 and further comprising the features according the characterising part of claim 1.

Thanks to the invention after snap coupling between the plug and the body of the cock, the rotatable truncated cone-shaped plug is steadily retained in its predetermined axial operating position, in which it ensures the best seal and the best performance of the cock. The eventual axial forces tending to release the rotatable plug from the body of the cock, are distributed over the whole perimeter of the annular snap coupling elements, wherefore the plug is very strongly anchored to the body of the cock. The annular shape of both the elements for snap anchoring between the plug and the body of the cock allows for a very simple construction form, which is easy and cheap to manufacture. The assembly of the cock may also be easy and fast to carry out, as a simple axial insertion of the plug into its housing hole in the body of the cock is needed, by applying a sufficient force, for example by a sharp axial blow, for providing snap coupling between the two annular coupling elements.

The tolerances between the plug and the body of the cock are chosen in such a way that, in the axial operating position of the plug, in which the annular snap coupling elements are engaged with each other, the plug may be freely rotated, though preferably offering a resistance which is such as to retain the plug with a sure locking effect in the angular positions, into which it is set.

Preferably, the annular snap coupling projection on the plug engages with the outer annular end of an annular neck provided on the outer part of the body of the cock coaxially to the hole for housing the plug. This embodiment has the additional advantage that the thickness of the wall of the external neck on the body of the cock may be freely selected in such a way, as to enable it to reach a desired radial elastic deformability, in order to facilitate the snap coupling with the annular projection of the plug. As a consequence, the annular coupling projection on the rotatable plug may be made to be stiffer and stronger, and particularly to project to a smaller extent, thus furtherly enhancing the snap coupling strength and making the manufacture even easier.

According to another preferred characteristic of the invention, for a better seal of the aforesaid cocks according to the invention the diameter through hole also opens, at one of its longitudinal sides, partially or completely and for example by means of one or more radial holes, onto the peripheral surface of the plug at that angular area which, when the plug is in the position for closing the cock, faces the connecting conduit connected to the pipe carrying the higher pressure fluid, for example the incoming fluid under pressure, intended to be delivered through the cock. All this in such a way that the through hole of the plug gets to communicate with the said pressure conduit in the angular position of the plug for closing the cock, and the fluid pressure acts inside the said through hole through its open longitudinal side and exerts a corresponding radial pressure force on the opposite side of the said through hole, radially compressing the plug outwards, against the inner wall of its housing hole, on that area in which the connecting conduit for the fluid coming out of the cock opens, and improving the seal of the cock in its closing position.

Further features of the invention are disclosed in the dependent claims.

These characteristics and others of the invention and the advantages derived therefrom will appear from the following description of one embodiment of the cock according to the invention, illustrated by way of non-limiting example in the annexed drawings, in which:
Fig. 1 is an elevational, part-sectional lateral view of the cock according to the invention.
Fig. 2 shows the cock of fig. 1, in a part-sectional central view, with respect to the line II-II of fig. 1. The right part of fig. 2 is a view of a variant embodiment of the cock according to fig. 1, sectional with respect to the line II'-II'.
Fig. 3 is a magnified view of the particular enclosed in the circle III of fig. 1.
Fig. 4 is an elevational frontal end view of the cock, partially sectional and with the rotatable plug in the position for opening the cock.
Fig. 5 is a cross sectional view of fig. 4, with the rotatable plug in the position for closing the cock.
Fig. 6 is a cross sectional view of another embodiment of the cock, with the rotatable plug in the position for closing the cock.
Fig. 7 is a sectional view with respect to the line VII-VII of fig. 6.

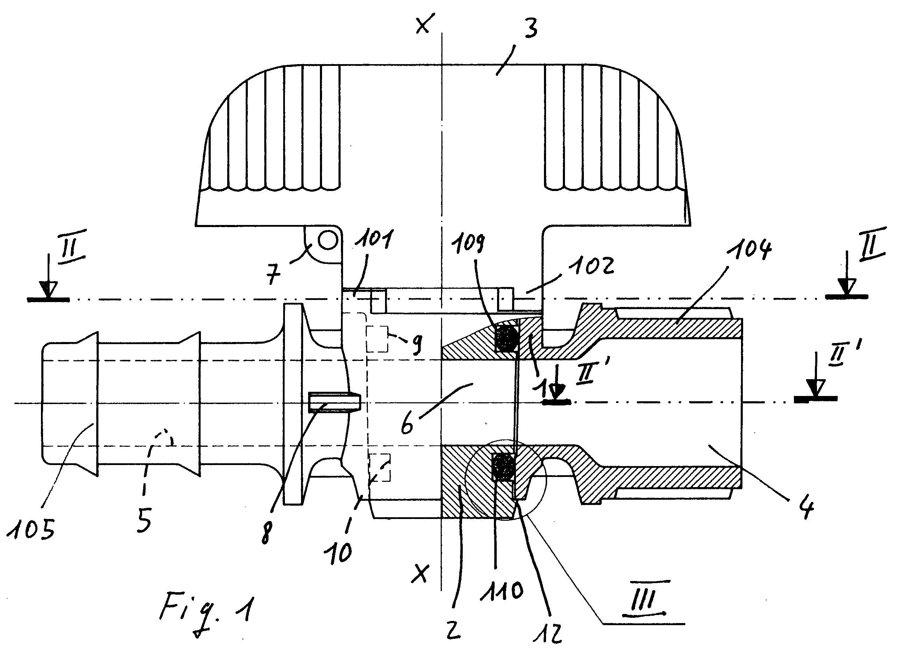

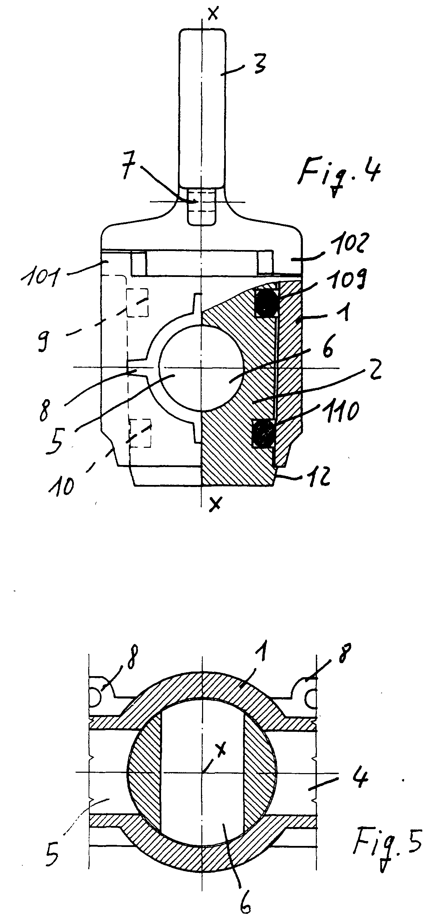

Referring to figs. 1 to 5, the cock illustrated has a body 1, housing a plug 2, which is substantially truncated cone-shaped and rotatable about its axis X-X. The truncated cone-shaped plug 2 is mounted into a corresponding housing hole, made in the body 1 of the cock and is provided - at its end having the shorter diameter and projecting out,of the body 1 - with an operating handle 3 for its manual rotation.

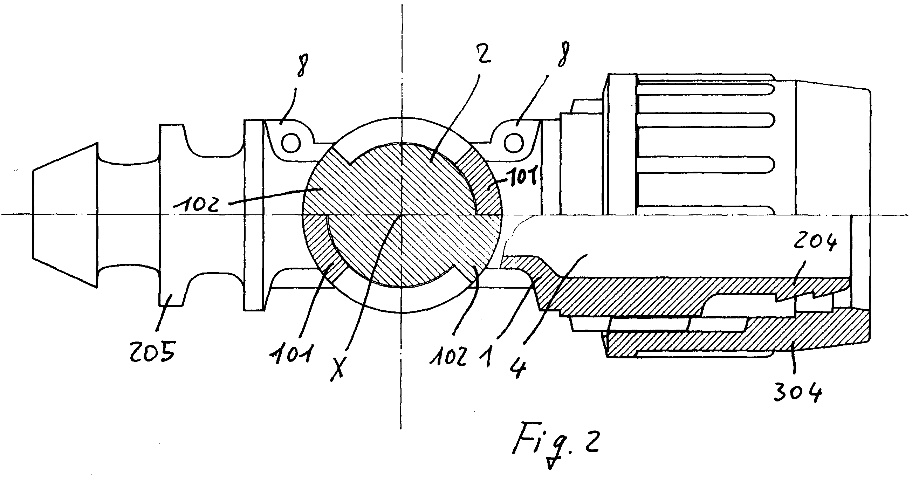

In the body 1 of the cock there are provided two connecting conduits 4 and 5, which are orientated diametrically with respect to the rotatable plug and open in opposite points into the hole for housing the plug. At their outer ends, the two connecting conduits 4 and 5 are provided with any suitable connecting means, to be connected to any pipe associated thereto, for the incoming and outcoming flow. Thus, for example,in the embodiment according to fig. 1, the said connecting means consist, for the connecting conduit 4, of the tubular threaded sleeve 104 of a screw joint, and for the connecting conduit 5, of the tubular toothed sleeve 105 for the coupling of a flexible pipe. In fig. 2, the said connecting means are indicated, for the connecting conduit 4, with a tubular toothed sleeve 204 for the coupling of a flexible pipe and with a pipe ring 304 which can be screwed on the said sleeve, whereas, for the opposite connecting conduit 5, there is provided another type of tubular sleeve 205 for the coupling and fixing of a flexible pipe. In this case, the said connecting means 104, 105, 204, 304, 205 are not essential for the purposes of the present invention and may be found in many different embodiments.

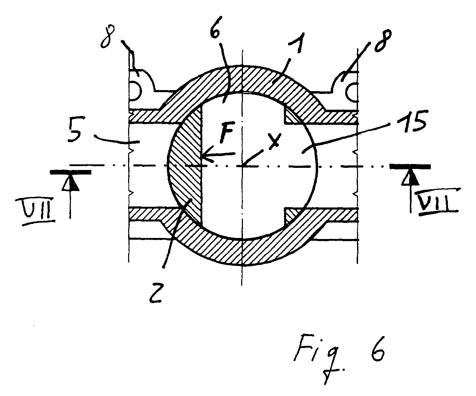

In the rotatable truncated cone-shaped plug, there is provided a transverse through hole 6, which - on rotation of the plug 2 - may be alternately set into an angular position for opening the cock, in which it is disposed coaxially to the two connecting conduits 4 and 5, communicating with these conduits and providing communication between their respective pipes, as shown in figs. 1, 3 and 4, and into an angular position for closing the cock, in which it is disposed at a right angle with respect to the two connecting conduits 4, 5, closing them and breaking the communication between them and between their respective pipes, as shown in fig. 5.

The rotatable plug 2 has, under the handle 3, two diametrically opposite teeth 102, which project towards the body 1 of the cock. These teeth 102 engage between two diametrically opposite matched projections 101, protruding out of the body 1 of the cock towards the handle 3. The teeth 102 of the plug 2 and the matched projections 101 of the body 1 of the cock have a position and an angular extension such as to restrict the rotation range of the rotatable plug to 90°, stopping it in the aforedescribed positions for opening and closing the cock.

The operating handle of the rotatable plug 2 has a flat, winged shape and is orientated, with respect to the plug 2, in such a way as to be disposed in the longitudinal direction of the cock, that is in the same line as the two diameter coaxial connecting conduits 4, 5, in the angular opening position of the plug 2, while it is disposed transverse to the cock and to the said two connecting conduits 4, 5, in the angular closing position. By this arrangement, the winged handle 3 is also useful to clearly indicate the closing or opening condition of the cock.

In a corner under the winged handle 3, the rotatable plug has an outer pierced connection plate 7, associated to two pierced wings provided on the outer part of the body 1 of the cock. Through this pierced connection plate 7 and through the pierced wings 8, the line for an eventual plumbing of the cock may be made to pass.

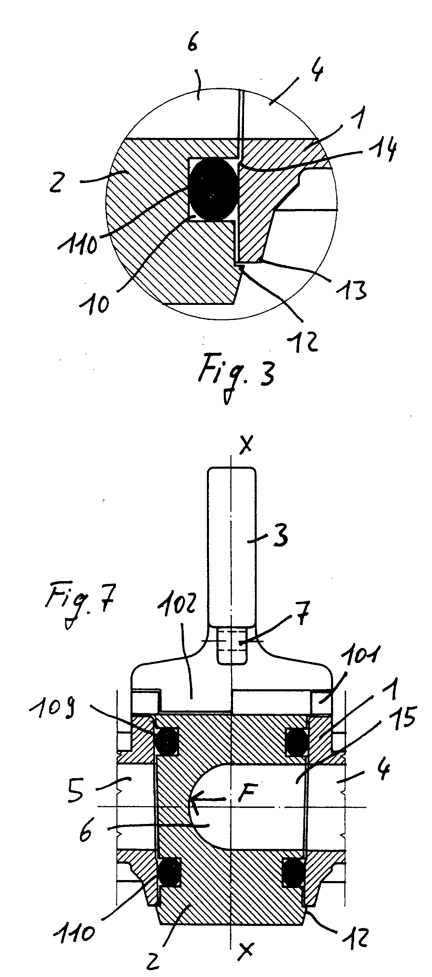

The rotatable truncated cone-shaped plug 2 is provided, at each of the two sides of its diameter through hole 6, with a peripheral annular groove 9, 10, for housing an annular O-ring seal 109, 110, interacting with a corresponding part of the inner wall of the hole provided inside the body 1 of the cock for housing the plug 2. Preferably, the annular groove 10 and the corresponding annular seal 110, which are close to that end of the truncated cone-shaped plug 2, which has the shorter diameter, are provided in a corresponding cylindrical end part 2' of the plug 2, as shown particularly in fig. 3. This cylindrical end part 2' of the rotatable plug 2 is housed, together with the annular seal 110 and with the whole or almost the whole corresponding annular groove 10, in a corresponding cylindrical end part 11 of the hole made in the body 1 of the cock for housing the plug. This cylindrical end part 11 of the hole for housing the rotatable plug 2 is connected to the truncated cone-shaped part of the said hole by means of a small step 14, being itself disposed at the annular groove 10 of the plug 2 or at the delimiting edge of the groove 10. This arrangement has the advantage to prevent the annular seal 110, housed inside the said groove 10, from being pinched between the body 1 of the cock and the truncated cone-shaped plug 2 on insertion of the latter into the former.

That end of the rotatable truncated cone-shaped plug 2 which has the shorter diameter, opposite to the operating handle 3, protrudes out of the body 1 of the cock and is provided, on its peripheral part, with an outer annular projection 12 for snap coupling. This annular projection 12 has, when seen through its axial section, a saw-tooth profile, one side thereof being inclined outwards and an opposite side being substantially perpendicular to the axis X-X of the plug 2, and forms an undercut with respect to the direction of the axial movement of insertion of the truncated cone-shaped plug 2 into its housing hole in the body 1 of the cock. The outer annular snap coupling projection 12 of the plug 2 interacts with the outer annular end of a neck 13, projecting out of the body 1 of the cock on the axial extension of the hole for housing the plug 2. The thickness of the wall of this neck is selected in such a way, as to allow, while assembling the cock, for a snap engagement of the outer annular projection 12 of the plug 2 with the outer annular end of the neck 13, after radial elastic deformation of the neck 13 and/or of the annular projection 12, as shown in fig. 3.

Particularly, the cock is assembled by introducing the truncated cone-shaped plug 2 with its end having the shorter diameter turned frontwards (downwards in the figures), into its housing hole in the body 1 of the cock, and by inserting, therefore, the teeth 102 of the plug 2 between the matched projections 101 of the body 1 of the cock. When the truncated cone-shaped plug 2 reaches its predetermined operating position, or a little before, it is submitted to an axial pressure (preferably a sharp axial force, for example by a hammer blow) which is such as to snap engage its outer annular coupling projection 12, through the undercut side of its saw-tooth profile, with the outer end edge of the neck 13.

In the illustrated embodiment, the annular snap coupling projection 12, provided on the peripheral part of the plug 2, and the outer annular end of the neck 13 of the body 1 of the cock, extend continuously all around the axis of rotation X-X of the plug 2. At least one of them may be also made to be discontinuous, that is consisting of a plurality of single spaced sectors, distributed with an appropriate, preferably even arrangement, over the circumference of the rotatable plug 2.

In the embodiment shown in figs. 6 and 7, the diameter through hole 6 of the truncated cone-shaped plug 2 is open on the peripheral surface of the plug 2, on the longitudinal side of the said through hole 6, which - in the angular position of the rotatable plug 2 corresponding to the cock closing condition and shown in figs. 6 and 7 - faces the connecting conduit 4, which leads the incoming pressure fluid. The opening of the said longitudinal side of the diameter through hole 6 may be obtained, for example, by means of a corresponding radial hole 15, opening with its inner end into the diameter through hole 6, and with its outer end on the peripheral part of the rotatable plug 2. Instead of this radial hole 15, there may be provided one or more additional equivalent apertures or openings. In any case, when the rotatable plug 2 is in its angular position for closing the cock, shown in figs. 6 and 7, its diameter through hole 6 still communicates with the connecting conduit 4 for the incoming pressure fluid, whereas only the opposite connecting conduit 5 is closed. Therefore, the pressure of the incoming fluid acts in the diameter through hole 6 even in the closing position of the cock and exerts - on the longitudinal side of the said through hole 6, opposite to the peripherally open side of the through hole 6 - a radial force F, directed towards the connecting outlet 5, compressing with a higher intensity the rotatable truncated cone-shaped plug 2, against the inner wall of its housing hole inside the body 1 of the cock, thus improving the seal of the outlet connecting conduit 5.

Both the body 1 of the cock and the rotatable truncated cone-shaped plug 2 are made of a suitable plastic material. Particularly, the body 1 of the cock is made to be integral with the tubular connecting sleeves 104, 105, 204, 205, with the pierced wings 8, with the matched projections 101 and with the neck 13, whereas the plug 2 is made to be integral with the handle 3, with the pierced connection plate 7, with the teeth 102 and with the outer annular snap coupling projection 12.

## Claims

1. Cock with truncated cone-shaped plug,
a) the cone-shaped plug (2) being rotatable in a corresponding housing hole inside the body (1) of the cock, and provided with at least one through hole (6) which can provide communication between at least two connecting conduits (4, 5) made in the body of the cock,
b) both the body of the cock and the plug being made of plastic and the body (1) of the cock and the rotatable plug (2) have interacting elements (12, 13) for snap coupling, made to be annular and, coaxial to the plug (2) axis, that is extending continuously or discontinuously all around the latter,
c) one (12) of the said elements for snap coupling being axially engageable with the other (13) through an undercut in the operating position of the plug (2), after radial elastic deformation of at least one of the said elements (12, 13), on axial insertion of the plug (2) into its housing hole inside the body of the cock (1), for mounting purposes,
d) one of the snap coupling elements is a peripheral annular projection (12) of the rotatable plug (2) and the other of the snap coupling elements is an annular edge (13) of the body (1) of the cock;
e) the annular snap coupling projection (12) being placed on the rotatable truncated cone-shaped plug (2) at its end with the shorter diameter projecting out of the body (1) of the cock, and interacts with the corresponding outer annular edge of the hole made in the body (1) of the cock for housing the plug (2),
characterised in that at its end opposite to the snap coupling annular projection (12), the rotatable plug (2) of the cock further has a radial surface (102) projecting radially outwards from the peripheral surface, which radial surface (102) rotatably abuts against an annular facing end surface of the body (1) of the cock when the said plug (2) is engaged in said body (1).

2. Cock as claimed in claims 1, characterized in that the annular snap coupling projection (12) on the rotatable plug (2) has, when seen through a sectional view, a saw-tooth profile, one side thereof being turned frontwards in the direction of the axial insertion of the plug (2) into its housing hole inside the body (1) of the cock, and the other side orientated to be substantially perpendicular to the axis (X) of the plug (2) so as to form an undercut with respect to the said direction of insertion.

3. Cock as claimed in claims 1 or 2, characterized in that the annular snap coupling projection (12) on the plug (2) interacts with the outer annular end of an annular neck (13) provided on the outer part of the body (1) of the cock on the axial extension of the hole for housing the plug (2).

4. Cock as claimed in one of the preceding claims, characterized in that at least one of the annular snap coupling elements (12, 13) consists of a plurality of single spaced, circumferencially sequential sectors, distributed with a preferably even arrangement, over the circumference of the plug (2).

5. Cock according to one of the preceding claims, characterized in that the diameter through hole (6) of the plug (2) is open, partially or completely, on the outer surface of the plug (2) at one of the longitudinal sides of the said hole (6), in such a way that the said open longitudinal side (15) gets to communicate, in the angular position of the plug (2) for closing the cock, with the connecting conduit (4) leading the incoming fluid under pressure.

6. Cock as claimed in claim 5, characterized in that the opening of one of the longitudinal sides of the diameter through hole (6) of the plug (2) is obtained by means of at least an aperture (15), which is substantially radial, and communicates with the said through hole (6), opening onto the peripheral surface of the plug (2).

7. Cock as claimed in one of the preceding claims, characterized in that the rotatable truncated cone-shaped plug (2) has two peripheral annular, preferably O-ring seals (109, 110), which are housed inside corresponding peripheral annular grooves (9, 10) and are intended to be axially spaced at the two sides of the through hole (6) of the plug (2).

8. Cock as claimed in claim 7, characterized in that at least one of the annular seals (110) is provided in coincidence with a cylindrical part (2') of the plug (2), being housed in a corresponding cylindrical end part (11) of the housing hole made in the body (1) of the cock for housing the plug (2), the said cylindrical part (11) of the said housing hole being connected to the remaining truncated cone-shaped part of the said housing hole by means of a small step (14), being itself disposed in coincidence with a delimiting edge of its respective peripheral annular groove (10) of the plug (2), or close to this edge.

9. Cock as claimed in one of the preceding claims, characterized in that the truncated cone-shaped plug (2) is provided, at its end with the longer diameter, with an outer operating handle (3), in the form of a flat wing, the plug (2) and the body (1) of the cock being provided with teeth or interacting matched projections (102, 101), which stop the rotation of the plug (2) in its angular positions, for opening and closing the cock, in which positions the operating wing (3) is disposed respectively in the same line as the connecting conduits (4, 5) for the fluid inlet and outlet, and transverse thereto respectively.

10. Cock as claimed in claim 9, characterized in that on one end of the plug (2) and on the body (1) of the cock, there are provided outer pierced wings (7, 8), for the passage of a plumbing line.

## Patentansprüche

1. Hahn mit kegelstumpfförmigem Küken, bei dem
a) das kegelförmige Küken (2) in einer passenden Sitzbohrung im Inneren des Hahngehäuses (1) drehbar gelagert und mindestens eine Durchgangsbohrung (6) aufweist, die eine Verbindung zwischen mindestens zwei im Hahngehäuse vorgesehenen Anschlusskanälen herstellen kann,
b) sowohl das Hahngehäuse als das Küken sind aus Kunststoff hergestellt, wobei das Hahngehäuse (1) und das drehbare Küken (2) zusammenwirkende Schnappverbindungselemente (12, 13) aufweisen, die ringförmig und gleichachsig zur Kükenachse gestaltet sind, d.h. sich kontinuierlich oder diskontinuierlich um das Küken herum erstrecken,
c) eines (12) der genannten Schnappverbindungselemente ist achsial in Eingriff bringbar mit dem anderen Element (13) in der Betriebsstellung des Kükens mit Hilfe einer Hinterschneidung und nach elastischer radialer Verformung von mindestens einem der genannten Elemente (12, 13) beim achsialen Einsetzen des Kükens (2) anläßlich der Montage in die Sitzbohrung im Inneren des Hahngehäuses (1),
d) eines der Schnappverbindungselemente ist ein ringförmiger Umfangsvorsprung (12) des drehbaren Kükens (2) und das andere Schnappverbindungselement ist eine ringförmige Kante (13) des Hangehäuses (1),
e) der ringförmige Schnappverbindungsvorsprung (12) ist auf dem drehbaren kegelstumpfförmigen Küken an dem einen kleineren Durchmesser aufweisenden und nach außen aus dem Hahngehäuse (1) vorspingenden Kükenende angeordnet und wirkt mit der entsprechenden, äußeren, ringförmigen Kante des im Hahngehäuse (1) für den Sitz des Kükens vorgesehenen Bohrung zusammen,
dadurch gekennzeichnet, dass das drehbare Hahnküken (2) außerdem an seinem dem ringförmigen Schnapp-verbindungsvorspung (12) entgegengesetzten Ende eine radiale, nach außen von der Umfangsfläche vorspingende Radialfläche (102) aufweist, welche Radialfläche (102) drehbar an der gegenüberliegenden Endfläche des Hahngehäuses (1) anliegt, wenn das genannte Küken (2) mit dem genannten Gehäuse (1) im Eingriff steht.

2. Hahn nach Anspruch 1, dadurch gekennzeichnet, dass der ringförmige, auf dem drehbaren Küken (2) vorgesehene Schnappverbindungsvorsprung (12) ein im Querschnitt gesehen sägezahnförmiges Profil aufweist, dessen eine Seite nach vorn in der achsialen Einführungsrichtung des Kükens (2) in seine Sitzbohrung im Inneren des Hahngehäuses (1) weist, und dessen andere Seite derart im wesentlichen senkrecht zur Achse (X) des Kükens (2) gerichtet ist, dass sie eine Hinterschneidung in Bezug auf die genannte Einführungsrichtung bildet.

3. Hahn nach Anspruch 1 oder 2, dadurch gekennzeichnet, dass der ringförmige, auf dem Küken (2) vorgesehene Schnappverbindungsvorsprung (12) mit dem äußeren, ringförmigen Ende eines ringförmigen Kragens (13) zusammenwirkt, der auf der Außenseite des Hahngehäuses (1) in der achsialen Verlängerung der Sitzbohrung für das Küken (2) vorgesehen ist.

4. Hahn nach einem der vorgehenden Ansprüche, dadurch gekennzeichnet, dass mindestens eines der ringförmigen Schnappverbindungselemente (12, 13) aus einer Mehrzahl von einzelnen, voneinander abstehenden, in Umfangsrichtung aufeinanderfolgenden Abschnitten besteht, die vorzugsweise gleichmäßig auf dem Umfang des Kükens (2) verteilt sind.

5. Hahn nach einem der vorgehenden Ansprüche, dadurch gekennzeichnet dass die diametrale Durchgangsbohrung (6) des Kükens (2) auf der Außenseite des Kükens (2) im Bereich einer der Längsseiten der genannten Bohrung (6) derart teilweise oder ganz offen ist, dass die genannte offene Längsseite (15) in der den Hahnabschluss bewirkenden Winkelstellung des Kükens (2) mit dem die ankommende Druckflüßigkeit führenden Anschlusskanal (4) in Verbindung steht.

6. Hahn nach Anspruch 5, dadurch gekennzeichnet, dass die Öffnung der einen Längsseite der diametralen Durchgangsbohrung (6) des Kükens (2) aus mindestens einer im wesentlichen radialen Aussparung (15) besteht, die mit der genannten Durchgangsbohrung (6) in Verbindung steht und sich auf der Umfangsfläche des Kükens (2) öffnet.

7. Hahn nach einem der vorgehenden Ansprüche, dadurch gekennzeichnet, dass das drehbare, kegelstumpfförmige Küken (2) zwei ringförmige, vorzugsweise O-ringförmige Umfangsdichtungen (109, 110) aufweist, die in entsprechen ringförmigen Nuten (9, 10) gelagert und im achsialen Abstand voneinander auf den beiden Seiten der Durchgangsbohrung (6) des Kükens (2) angeordnet sind.

8. Hahn nach Anspruch 7, dadurch gekennzeichnet, dass mindestens eine der ringförmigen Dichtungen im Bereich eines zylindrischen Teils (2') des Kükens (2) vorgesehen und in einem entsprechenden zylindrischen Endteil (11) der im Hahngehäuse (1) gebildeten Sitzbohrung für die Lagerung des Kükens (2) angeordnet ist, wobei der zylindrische Teil (11) der genannten Sitzbohrung mit dem restlichen kegelförmigen Teil der genannten Sitzbohrung über eine kleine Stufe (14) verbunden ist, die ihrerseits im Bereich einer Begrenzungskante der betreffenden ringförmigen Umfangsnut (10) des Kükens (2) oder in der Nähe dieser Kante angeordnet ist.

9. Hahn nach einem der vorgehenden Ansprüche, dadurch gekennzeichnet, dass das kegelstumpfförmige Küken an seinem den größeren Durchmesser aufweisenden Ende mit einem äußeren, die Form eines flachen Flügels aufweisenden Betätigungsgriff (3) versehen ist, wobei das Küken (2) und das Hahngehäuse (1) mit Zähnen oder mit zusammenwirkenden, aufeinander angepassten Vorsprüngen (102, 101) versehen sind, die die Verdrehung des Kükens (2) in seinen der Hahnöffnung und dem Hahnabschluss entsprechenden Winkelstellungen anhalten, in welchen der Betätigungsflügel (3) entsprechend in der selben Richtung der Anschlusskanäle (4, 5) für den Flüßigkeitseinlauf und den Flüßigkeitsauslauf bzw. in Querrichtung dazu gerichtet ist.

10. Hahn nach Anspruch 9, dadurch gekennzeichnet, dass an einem Ende des Kükens (2) und des Hahngehäuses (1) gelochte Außenlappen (7, 8) für die Durchführung einer Plombierungsschnur vorgesehen sind.

## Revendications

1. Robinet à boisseau troncoconique,
a) le boisseau troncoconique (2) tournant dans un trou de logement correspondant réalisé à l'intérieur du corps (1) du robinet, et comportant au moins un trou de passage (6) permettant la communication entre au moins deux tuyaux de raccordement (4, 5) prévus dans le corps du robinet,
b) le corps du robinet et le boisseau étant réalisés tous les deux en matière plastique et le corps (1) du robinet et le boisseau tournant (2) ayant des éléments coopérants (12, 13) d'enclenchement, réalisés annulaires et coaxiaux à l'axe du boisseau (2), c'est-à-dire s'étendant de façon continue ou discontinue,
c) l'un (12) desdits éléments d'enclenchement pouvant être engagé axialement avec l'autre (13) grâce à un décrochement en position active du boisseau (2), suite à la déformation élastique radiale d'au moins un de ces éléments (12, 13), ou à l'insertion radiale du boisseau (2) dans son logement à l'intérieur du corps du robinet (1), au cours du montage,
d) l'un des éléments d'enclenchement est une saillie annulaire périphérique (12) du boisseau tournant (2), et l'autre élément d'enclenchement est un bord annulaire (13) du corps (1) du robinet;
e) la saillie annulaire d'enclenchement (12) étant prévue à l'extrémité au plus petit diamètre du boisseau tournant troncoconique (2) faisant saillie vers l'extérieur du corps (1) du robinet, et coopérant avec le bord annulaire extérieur correspondant du trou réalisé dans le corps (1) du robinet pour loger le boisseau (2),
caractérisé en ce que
à l'extrémité opposée à la saillie annulaire d'enclenchement (12), le boisseau tournant (2) du robinet a aussi une surface radiale (102) faisant saillie radialement vers l'extérieur de la surface périphérique, ladite surface radiale (102) butant à rotation contre la surface annulaire d'extrémité du corps (1) du robinet, devant elle, lors de l'engement dudit boisseau (2) dans ledit corps (1).

2. Robinet selon la revendication 1, caractérisé en ce que la saillie annulaire d'enclenchement (12) du le boisseau tournant (2) a, en vue de section, un profil en dents de scie, l'un de ses côtés étant tourné vers l'avant selon la direction d'insertion du boisseau (2) dans le logement à l'intérieur du corps (1) du robinet, et l'autre côté étant orienté essentiellement de manière perpendiculaire à l'axe (X) du boisseau (2), de façon à former un décrochement par rapport à ladite direction d'insertion.

3. Robinet selon la revendication 1 ou 2, caractérisé en ce que la saillie annulaire d'enclenchement (12) du boisseau (2) coopère avec l'autre extrémité annulaire d'un collet annulaire (13) prévu à l'extérieur du corps (1) du robinet sur l'extension axiale du logement du boisseau (2).

4. Robinet selon l'une quelconque des revendications précédentes, caractérisé en ce qu'au moins un des éléments annulaires d'enclenchement (12, 13) est constitué d'une pluralité de secteurs individuels écartés, en disposition circulaire séquentielle, distribués de préférence uniformément sur la circumférence du boisseau (2).

5. Robinet selon l'une quelconque des revendications précédentes, caractérisé en ce que le trou de passage diamétral du boisseau (2) est ouvert, en partie ou totalement, sur la surface extérieure du boisseau (2) à l'un des côtés longitudinaux dudit trou (6), de façon que ledit côté longitudinal ouvert (15) puisse communiquer, quand le boisseau (2) est en position angulaire de fermeture du robinet, avec le tuyau de connexion (4) portant le fluide sous pression en entrée.

6. Robinet selon la revendication 5, caractérisé en ce que l'ouverture d'un des côtés longitudinaux du trou de passage diamétral (6) du boisseau (2) est réalisée en pratiquant au moins un passage (15) qui est essentiellement radial, et communique avec ledit trou de passage (6), ouvrant sur la surface périphérique du boisseau (2).

7. Robinet selon l'une quelconque des revendications précédentes, caractérisé en ce que le boisseau troncoconique tournant (2) a deux garnitures annulaires périphériques, de préférence des o-rings (109, 110), logées à l'intérieur de rainures annulaires périphériques (9, 10) et écartées axialement au deux côtés du trou de passage (6) du boisseau (2).

8. Robinet selon la revendication 7, caractérisé en ce qu'au moins une des garnitures annulaires (110) est prévue coïncidente avec une partie cylindrique (2') du boisseau (2), logée dans une partie terminale cylindrique correspondante (11) du logement réalisé dans le corps (1) du robinet pour loger le boisseau (2), ladite partie cylindrique (11) dudit logement étant raccordée à la partie restante troncoconique par un petit gradin (14), étant aussi coïncident avec un bord de délimitation de sa respective rainure annulaire périphérique (10) du boisseau (2) ou près de ce bord.

9. Robinet selon l'une quelconque des revendications précédentes, caractérisé en ce que le boisseau troncoconique (2) comporte, à l'extrémité au plus grand diamètre, une poignée extérieure de manoeuvre (3) ayant la forme d'une ailette plate, le boisseau (2) et le corps (1) du robinet comportant des dents ou des saillies (102, 101) accouplées coopérantes, qui arrêtent la rotation du boisseau (2) dans ses positions angulaires d'ouverture et de fermeture du robinet, dans lesquelles positions l'ailette de manoeuvre (3) est disposée respectivement alignée avec les tuyaux de raccordement (4, 5) pour l'entrée et le sortie du fluide et transversale à ces derniers.

10. Robinet selon la revendication 9, caractérisé en ce qu'à une extrémité du boisseau (2) et sur le corps (1) du robinet, des ailettes extérieures perforées (7, 8) sont prévues pour le passage d'un fil de plombage.
